# EUROPÄISCHE PATENTSCHRIFT

(11) **EP 1 344 666 B1**
(45) Veröffentlichungstag und Bekanntmachung des Hinweises auf die Patenterteilung: **15.11.2006**
(21) Anmeldenummer: 02026287.9
(22) Anmeldetag: 27.11.2002
(51) Int. Cl.: B60H 1/22

(54) **Luftheizgerät zur Integration in eine luftführende Gehäuseanordnung**
Air heater integrated in an air conveying housing arrangement
Appareil de chauffage d'air integré dans un ensemble de transport d'air

(30) Priorität: 15.03.2002 DE 10211591
(43) Veröffentlichungstag der Anmeldung: 17.09.2003
(73) Patentinhaber: J. Eberspächer GmbH & Co. KG, 73730 Esslingen (DE)
(72) Erfinder: Schlecht, Patric, 73760 Ostfildern (DE); Collmer, Andreas, 73760 Ostfildern (DE)
(74) Vertreter: Ruttensperger, Bernhard

(56) Entgegenhaltungen:
- DE-A- 1 579 693
- DE-C- 466 836
- GB-A- 478 771
- PATENT ABSTRACTS OF JAPAN vol. 012, no. 392 (M-755), 19. Oktober 1988 (1988-10-19) & JP 63 141818 A (NIPPON DENSO CO LTD), 14. Juni 1988 (1988-06-14)

## Beschreibung

Die vorliegende Erfindung betrifft ein Luftheizgerät zur Integration in eine luftführende Gehäuseanordnung, insbesondere eine Gehäuseanordnung eines Fahrzeugklimagerätes.

Beim Eingliedern zusätzlicher Systemkomponenten in ein Fahrzeug besteht sowohl aus Gründen des beschränkten Bauraums als auch aus Kostengründen das Bestreben, durch Zusammenfassen von verschiedenen Systembereichen möglichst klein bauende Anordnungen zu schaffen, bei welchen durch Funktionenverschmelzung bzw. gemeinsame Nutzung verschiedener Systemkomponenten eine verbesserte Einsetzbarkeit erzielt wird. Da jedoch verschiedene Systemkomponenten bzw. Systembereiche häufig von verschiedenen Zulieferfirmen bereitgestellt werden, und diese verschiedenen Komponenten bzw. Systembereiche für verschiedene Fahrzeugtypen im Allgemeinen auch unterschiedlich ausgebildet sein werden, ist es schwierig, diese Kombinierbarkeit für verschieden aufzubauende Systeme zu gewährleisten.

Ein Luftheizgerät gemäß dem Oberbegriff des Anspruchs 1 ist aus der GB 478 771 bekannt. Bei diesem bekannten Gerät ist der Wärmetauscherkörper im Wesentlichen topfartig ausgestaltet und weist eine zylindrische Umfangswand sowie eine an einem Endbereich senkrecht dazu stehende Endwand auf. Der Wärmetauscherkörper ist umgeben von einer Mehrzahl von Wärmeübertragungsrippen. Der Innenraum des Wärmetauscherkörpers ist durch mehrere Platten in Strömungskanalbereiche unterteilt, so dass eine ondulierende Strömungsführung erzielt wird. Der Strömungsquerschnitt ist dabei über die Länge des sich ergebendne Kanals näherungsweise gleichbleibend.

Die US 3 847 350 offenbart ein Heizgerät, bei welchem ein mit zu erwärmender Flüssigkeit gefüllter Tank von heißen Verbrennungsabgasen umströmt wird. Der Tank weist eine in Strömungsrichtung der Verbrennungsabgase sich konisch erweiterende Kontur auf.

Aus der DE 466 836 C ist ein Heizofen bekannt, bei dem die Verbrennungsabgase in einem zylindrisch gestalteten Rohr strömen. An der Innenseite des Rohrs sind in der Strömungsrichtung sich erstreckende Rippen vorgesehen, deren Rippenhöhe, also die Vorsprungshöhe über die Innenoberfläche des Rohrs, in Strömungsrichtung zunimmt.

Ziel der vorliegenden Erfindung ist es, ein Luftheizgerät bereitzustellen, das eine gleichmäßige, effiziente Erwärmung der zu erwärmenden Luft gewährleistet.

Gemäß der vorliegenden Erfindung wird diese Aufgabe gelöst durch ein Luftheizgerät zur Integration in eine luftführende Gehäuseanordnung, insbesondere eine Gehäuseanordnung eines Fahrzeugklimagerätes, wie es im Anspruch 1 definiert ist.

Beim Durchströmen des Wärmetauscherkörpers übertragen die im Brennerbereich erzeugten Verbrennungsabgase einen wesentlichen Teil der in diesen mitgeführten Wärmeenergie auf den Wärmetauscherkörper. Dabei kühlen sich die Verbrennungsabgase ab, mit der Folge, dass das durch die Abgase beanspruchte Volumen abnimmt bzw. der Abgasdruck abnimmt. Um über den gesamten Wärmetauscherkörper hinweg jedoch eine gleichbleibende Wärmeübertragungscharakteristik bereitstellen zu können, ist vorgesehen, dass der Wärmetauscherkörper in Richtung von dem Brennerbereich weg einen abnehmenden Strömungsquerschnitt für aus dem Brennerbereich austretende Verbrennungsabgase bereitstellt.

Ein wesentlicher Bauraum einnehmender Bestandteil eines Luftheizgerätes sind die zur Wärmeübertragung auf die zu erwärmende Luft dienenden Rippen. Je größer die umströmbare Wärmeübertragungsoberfläche dieser Rippen ist, desto effizienter kann die im Luftheizgerät generierte Wärme genutzt werden. Die vorliegende Erfindung sieht nunmehr im Bereich dieser Wärmeübertragungsrippen ein hoches Maß an Variabilität vor, da diese zumindest teilweise separat ausgebildet sind und somit in Anpassung an eine jeweilige Gehäuseanordnung, in welche das Luftheizgerät integriert werden soll, ausgewählt bzw. geformt werden können. Die anderen wesentlichen und deutlich kostenaufwendigeren Komponenten des Luftheizgerätes, wie z.B. der Wärmetauscherbereich und der Brennerbereich, können dabei als Grundtyp für eine Vielzahl verschiedener zur Integration vorgesehener Gehäuseanordnungen unverändert beibehalten werden, was die Integrationskosten erheblich reduziert.

Beispielsweise kann das erfindungsgemäße Luftheizgerät derart aufgebaut sein, dass der Wärmetauscherkörper in Richtung einer Körperlängsachse langgestreckt ist und dass wenigstens ein Teil der Wärmeübertragungsrippen für die zu erwärmende Luft eine im Wesentlichen orthogonal zur Körperlängsachse stehende Wärmeübertragungsfläche bereitstellt. Um in einfacher Art und Weise die Ankopplung verschiedener Wärmeübertragungsrippen an den Wärmetauscherkörper bei Erlangung eines guten Wärmeübertragungskontaktes zwischen diesen Baugruppen zu ermöglichen, wird vorgeschlagen, dass die Wärmeübertragungsrippenanordnung wenigstens ein Wärmeübertragungsrippenmodul umfasst und dass das wenigstens eine Wärmeübertragungsrippenmodul einen zur thermischen Ankopplung an den Wärmetauscherkörper ausgebildeten Ankopplungsbereich sowie wenigstens eine an den Ankopplungsbereich anschließende Wärmeübertragungsrippe umfasst.

Bei einer sehr einfach herstellbaren Ausgestaltungsform ist es möglich, dass das wenigstens eine Wärmeübertragungsrippenmodul einen hülsenartigen und den Wärmetauscherkörper an seiner Außenseite umgebend zu positionierenden Ankopplungsbereich aufweist, an welchen eine im Wesentlichen scheibenartige Wärmeübertragungsrippe anschließt. Um bei bzw. nach Kombination eines erfindungsgemäßen Luftheizgerätes mit einer dieses aufnehmenden Gehäuseanordnung leichten Zugriff auf im Betrieb möglicherweise auszutauschende bzw. zu wartende Systemkomponenten zu erhalten, wird vorgeschlagen, dass in einem Verbindungsbereich des Wärmetauscherkörpers mit dem Brennerbereich eine Befestigungsanordnung vorgesehen ist zur Festlegung an der Gehäuseanordnung derart, dass der Wärmetauscherkörper im Wesentlichen innerhalb eines luftführenden Volumenbereichs der Gehäuseanordnung zu liegen kommt und der Brennerbereich im Wesentlichen außerhalb des Luft führenden Volumenbereichs der Gehäuseanordnung zu liegen kommt.

Gemäß einer weiteren besonders vorteilhaften Ausgestaltungsform, welche auch unabhängig von dem Vorsehen separat ausgebildeter Wärmeübertragungsrippen einen wesentlichen Aspekt der vorliegenden Erfindung bereitstellt, kann vorgesehen sein, dass in dem Wärmetauscherkörper ein Abgasaustrittsabschnitt an einem außerhalb eines luftführenden Volumenbereichs der Gehäuseanordnung zu positionierenden Bereich des Wärmetauscherkörpers vorgesehen ist. Es wird auf diese Art und Weise gewährleistet, dass in dem luftführenden Volumenbereich der Gehäuseanordnung keine Verbindungsstelle zwischen zwei Leitungsabschnitten einer abgasführenden Leitung bereitgestellt werden muss. Die Gefahr, dass bei einer Leckage Verbrennungsabgase in den an sich zu erwärmenden und dann in den Fahrzeuginnenraum abzugebenden Luftstrom gelangen, kann somit im Wesentlichen vollständig ausgeschlossen werden.

Bei dem erfindungsgemäßen Luftheizgerät kann ferner vorgesehen sein, dass der Wärmetauscherkörper mit seiner Längserstreckung zum Positionieren im Wesentlichen orthogonal zu einer Luftströmungsrichtung in einem luftführenden Volumenbereich der Gehäuseanordnung ausgebildet ist.

Gemäß einem weiteren Aspekt betrifft die vorliegende Erfindung eine Kombination einer luftführenden Gehäuseanordnung, insbesondere eines Fahrzeugklimagerätes, mit einem erfindungsgemäßen Luftheizgerät, wobei das Luftheizgerät einen außerhalb eines luftführenden Volumenbereichs der Gehäuseanordnung positionierten Brennerbereich und einen im Wesentlichen in dem luftführenden Volumenbereich der Gehäuseanordnung sich erstreckend positionierten Wärmetauscherkörper aufweist.

Um eine sehr effiziente Wärmeübertragungswechselwirkung mit dem in der Gehäuseanordnung geführten Luftstrom erlangen zu können, wird vorgeschlagen, dass der Wärmetauscherkörper mit seiner Längserstreckungsrichtung im Wesentlichen orthogonal zu einer Strömungsrichtung eines den luftführenden Volumenbereich der Gehäuseanordnung durchsetzenden Luftstroms positioniert ist.

Ferner kann auch bei dieser Kombination vorgesehen sein, dass an dem Wärmetauscherkörper in einem außerhalb des luftführenden Volumenbereichs der Gehäuseanordnung positionierten Bereich desselben ein Abgasaustrittsbereich ausgebildet ist.

Gemäß einem weiteren vorteilhaften Aspekt der vorliegenden Erfindung wird vorgeschlagen, dass der Brennerbereich eine Gebläseanordnung zum Einleiten von Verbrennungsluft in diesen aufweist und dass zum Betreiben des Luftheizgerätes als Standheizung die Gebläseanordnung des Brennerbereichs sowie zusätzlich zu dieser eine Fahrzeuggebläseanordnung zum Fördern eines Luftstroms durch den luftführenden Volumenbereich der Gehäuseanordnung hindurch aktiviert werden. Es wird auf diese Art und Weise ermöglicht, dass der Luftstrom, welcher in den Brennerbreich zur Durchführung der Verbrennung in diesem eingeleitet wird, und der in der Gehäuseanordnung geführte und zu erwärmende Luftstrom voneinader unabhängig eingestellt werden.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine perspektivische Explosionsansicht eines Luftheizgerätes und einer dieses aufnehmenden Gehäuseanordnung;
- Fig. 2: eine perspektivische, zum Teil aufgeschnittene Ansicht des in Fig. 1 gezeigten Luftheizgerätes ohne daran vorgesehene Wärmeübertragungsrippenmodule;
- Fig. 3: eine Teilansicht eines Wärmetauscherkörpers des Luftheizgerätes mit daran angebrachten Wärmeübertragungsrippenmodulen;
- Fig. 4: eine perspektivische Ansicht einer Kombination eines erfindungsgemäßen Luftheizgerätes mit einer Gehäuseanordnung gemäß einer alternativen Ausgestaltungsart im zusammengebauten Zustand;
- Fig. 5: eine Schnittansicht der in Fig. 4 dargestellten Kombination, geschnitten in einer Ebene im Wesentlichen quer zu einer Strömungsrichtung des das Luftheizgerät umströmenden Luftstroms.

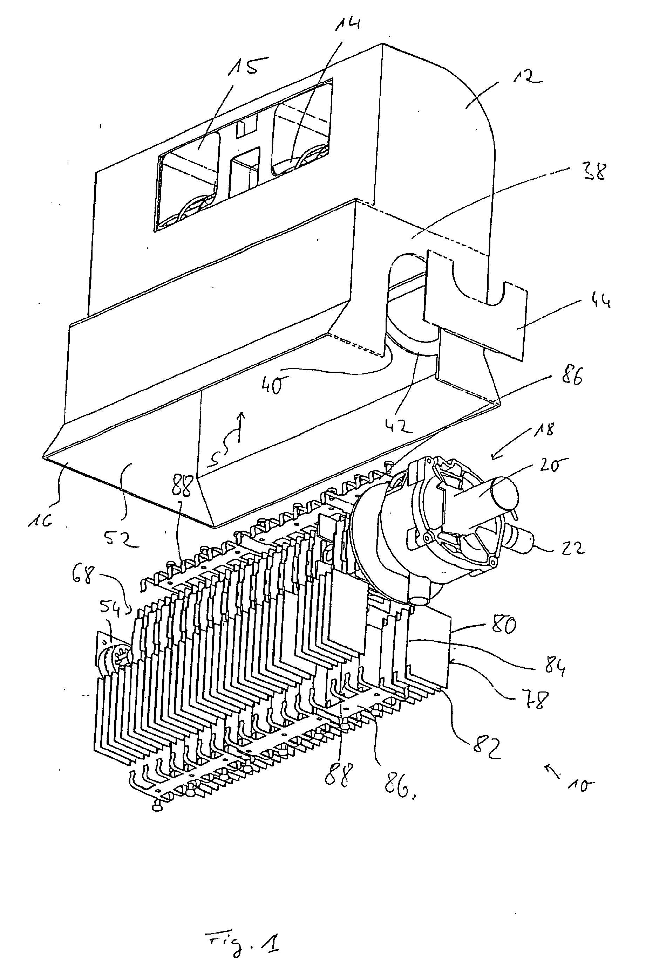

In Fig. 1 ist ein Luftheizgerät 10, welches zum Einsetzen in eine allgemein mit 12 bezeichnete Gehäuseanordnung ausgebildet ist, teilweise in Explosionsansicht dargestellt. Das Luftheizgerät 10 ist nicht nach den Prinzipien der Erfindung aufgebaut und dient zum Erläutern allgemeiner Konstruktionsprinzipien. Die Gehäuseanordnung 12 ist beispielsweise eine auch ein nur teilweise erkennbares Gebläse 14 und ggf. eine Klimaeinheit eines Kraftfahrzeugs aufnehmende Gehäuseanordnung, die an einem unteren Bereich eine langgestreckte näherungsweise rechteckige Aufnahmeöffnung 16 aufweist, in welche beim Zusammenfügen des Luftheizgeräts 10 mit der Gehäuseanordnung 12 das Luftheizgerät 10 eingeführt werden kann. Die behandelte Luft verlässt das Gehäuse im Bereich eines Luftaustritts 15.

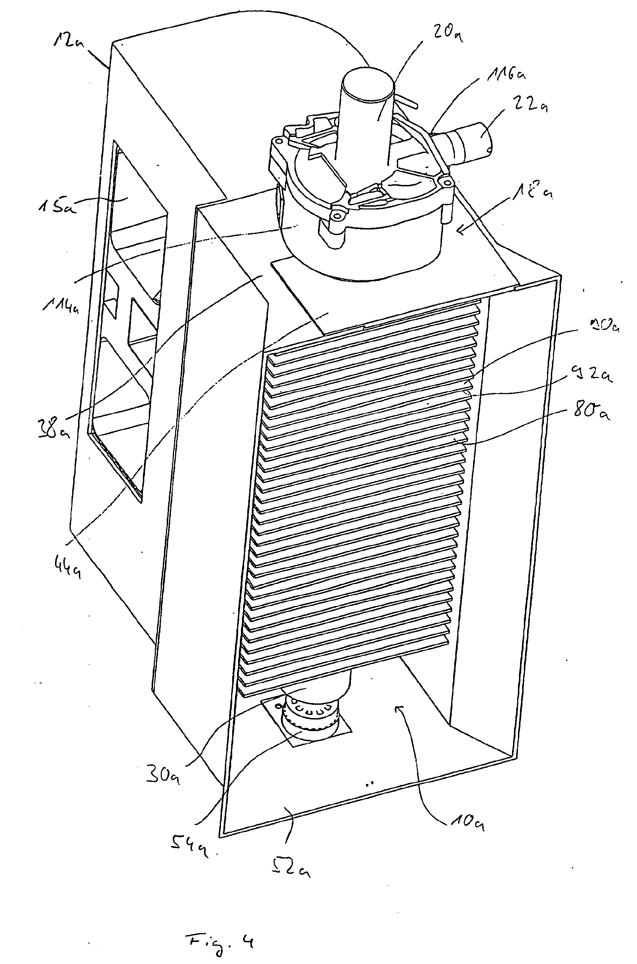

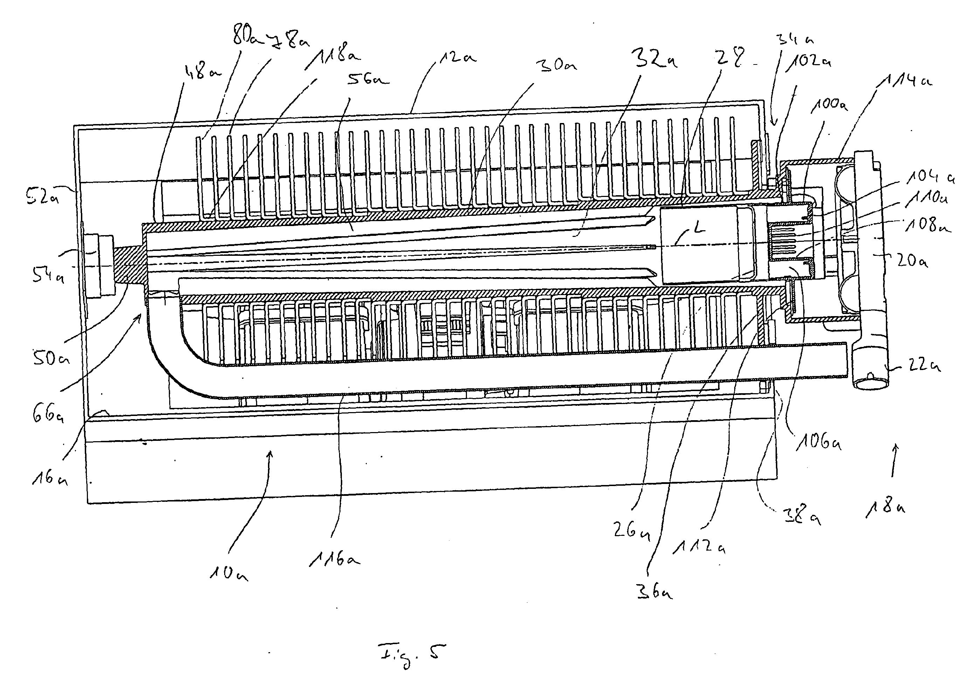

Das Luftheizgerät 10 umfasst einen allgemein mit 18 bezeichneten Brennerbereich, dessen innerer Aufbau nachfolgend mit Bezug auf die in den Figuren 4 und 5 dargestellte Ausgestaltungsform noch detaillierter beschrieben wird. Grundsätzlich sei jedoch ausgeführt, dass der Brennerbereich 18 von herkömmlichem Aufbau ist und ein Verbrennungsluftgebläse 20 aufweist, das über einen Verbrennunglufteintrittsabschnitt 22 Verbrennungsluft aufnimmt und in eine Brennkammer .24 fördert. Über eine in diesen Figuren nicht dargestellte Brennstoffzuführleitung wird Brennstoff in die Brennkammer 24 eingeleitet und wird mit der Vebrennungsluft verbrannt, so dass die Verbrennungsflamme bzw. die Verbrennungsabgase nach dem Durchströmen einer Flammblende 26 und eines Flammrohrs 28 in den in einem Wärmetauscherkörper 30 gebildeten langgestreckten Innenraum 32 eintreten. Der beispielsweise aus Aluminium in einem Gussverfahren hergestellte Wärmetauscherkörper 30 weist in seinem mit dem Brennerbereich 18 verbundenen Endbereich 34 einen Befestigungsflansch 36 auf, welcher zur Festlegung des Luftheizgeräts 10 an einer Seitenwandung 38 der Gehäuseanordnung 12 dient. In diesem Bereich weist die Seitenwandung 38 der Gehäuseanordnung 12 eine Aussparung 40 auf, welche der Wärmetauscherkörper 30 durchsetzt. Der Befestigungsflansch 36 liegt an der Innenseite der Seitenwandung 38 unter Zwischenlagerung eines Dichtungselements 42 an. Nach dem Einsetzen des Luftheizgerätes in die Gehäuseanordnung 12 wird der noch nicht verschlossene Bereich der Aussparung 40 in der Seitenwandung 38 durch ein Abdeckelement 44 abgeschlossen, so dass der in der Gehäuseanordnung 12 geführte Luftstrom im Bereich dieser Aussparung 40 nicht austreten kann. Nach dem Zusammenfügen des Luftheizgerätes 10 mit der Gehäuseanordnung 12 liegt der Brennerbereich 18 zusammen mit dem über den Befestigungsflansch 36 sich hinaus erstreckenden Endbereich 34 des Wärmetauscherkörpers 32 außerhalb der Gehäuseanordnung 12, während der verbleibende und wesentliche Längenabschnitt 46 des Wärmetauscherkörpers 30 innerhalb der Gehäuseanordnung 12 liegt und sich im Wesentlichen orthogonal zur Strömungsrichtung S des in der Gehäuseanordnung 12 geführten Luftstroms erstreckt. An seinem vom Brennerbereich 18 entfernten Endbereich 48 ist an den Wärmetauscherkörper 30 integral ein Befestigungsdorn 50 angeformt, der in eine entsprechende Aufnahme 54 an der weiteren Seitenwand 52 der Gehäuseanordnung 12 eingesetzt werden kann. Das Luftheizgerät 10 ist dann an seinen beiden Längsenden fest mit der Gehäuseanordnung 12 verbunden.

Die in den Innenraum 32 des Wärmetauscherkörpers 30 eintretenden Verbrennungsabgase strömen in Richtung vom Endbereich 34 zum Endbereich 48 und übertragen dabei Wärme auf die Innenoberfläche des Wärmetauscherkörpers 30, welche durch Bereitstellen von in Richtung zwischen den beiden Endbereichen 34, 48 sich erstreckenden Rippen 56 noch vergrößert ist. Durch ein ebenfalls zwischen den beiden Endbereichen 34, 48 sich erstreckendes Trennelement 58, welches beispielsweise aus Blechmaterial aufgebaut sein kann, ist der Innenraum 32 in zwei Bereiche 60, 62 unterteilt. In den Bereich 60 strömen die das Flammrohr 28 verlassenden heißen Verbrennungsabgase ein und bewegen sich dabei in Richtung auf den Endbereich 48 zu. Dort angelangt werden die Verbrennungsabgase durch den Strinwandungsbereich 64 des Wärmetauscherkörpers 30 umgelenkt und gelangen nunmehr in den Raumbereich 62, in welchem sie wieder zurück in Richtung zum Brennerbereich 18 strömen. An dem außerhalb der Gehäuseanordnung 12 zu positionierenden Endbereich 34 des Wärmetauscherkörpers 30 ist an diesen ein Abgasabgabestutzen 66 integral angeformt, über welchen die Verbrennungsabgase den Innenraum 32 bzw. den Raumbereich 62 desselben verlassen können.

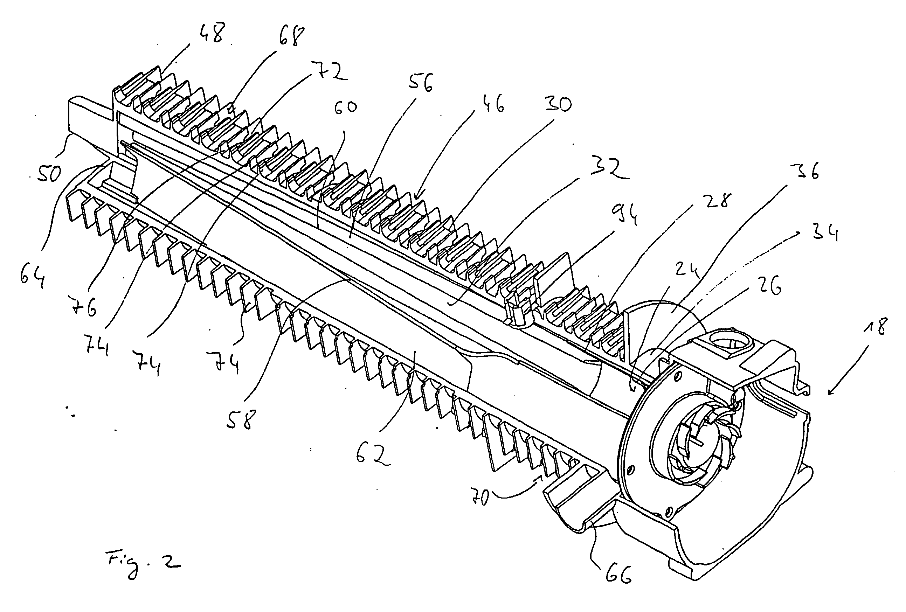

Man erkennt in Fig. 2, dass der innerhalb der Gehäuseanordnung 12 zu positionierende Abschnitt des erfindungsgemäßen Luftheizgerätes 10 gegen den Austritt von Verbrennungsabgasen vollständig abgeschlossen ist, da dort keine durch Zusammenfügen irgendwelcher Komponenten gebildete Übergangsstelle vorhanden ist. Sowohl die Verbrennungsluftzufuhr als auch die Brennstoffzufuhr als auch die Abgasabfuhr erfolgen in Bereichen außerhalb der Gehäuseanordnung 12, d.h. alle Leitungsübergangsstellen liegen außerhalb der Gehäuseanordnung 12. Die Gefahr, dass Verbrennungsabgase, Brennstoff oder sonstige Verunreinigungen in die zu erwärmende Luft gelangen, die innerhalb der Gehäuseanordnung 12 geführt ist, ist somit im Wesentlichen vollständig ausgeschaltet. Des Weiteren gewährleistet die erfindungsgemäße Ausgestaltung, dass alle möglicherweise für Reparatur- oder Wartungsvorgänge relevanten Systemkomponenten außerhalb der Gehäuseanordnung 12 liegen. Dies betrifft vor allem den Brennerbereich 18, in welchem ein nicht dargestellter Glühzündstift oder sonstige Komponenten möglicherweise nach einer vorbestimmten Betriebslebensdauer ausgetauscht werden müssen. Es ergibt sich somit eine servicefreundliche Gesamtanordnung.

Man erkennt des Weiteren, dass der Wärmetauscherkörper 30 an seiner Außenseite mit einer Oberflächenstrukturierung ausgebildet ist. Vor allem erkennt man, dass an seinen beiden im Wesentlichen quer zur Strömungsrichtung S, d.h. mit zur Strömungsrichtung S näherungsweise orthogonaler Seitennormalen zu positionierenden Bereichen 68, 70, in der Strömungsrichtung S sich erstreckende, langgestreckte und mit teilweise abgerundetem Profil ausgebildete Einsenkungsbereiche 72 gebildet sind, die durch jeweilige auch an den anderen Seitenbereichen des Wärmetauscherkörpers sich erstreckende Steg- oder Rippenbereiche 74 voneinander getrennt sind. Dabei sind diese Steg- bzw. Rippenbereiche 74 jeweils paarweise zusammengruppiert, so dass zwischen jedem Paar derartiger Steg- bzw. Rippenbereiche ein Zwischenraum 76 vorhanden ist. Die Rippenbereiche 74 dienen ferner zur Erhöhung der Außenoberfläche.

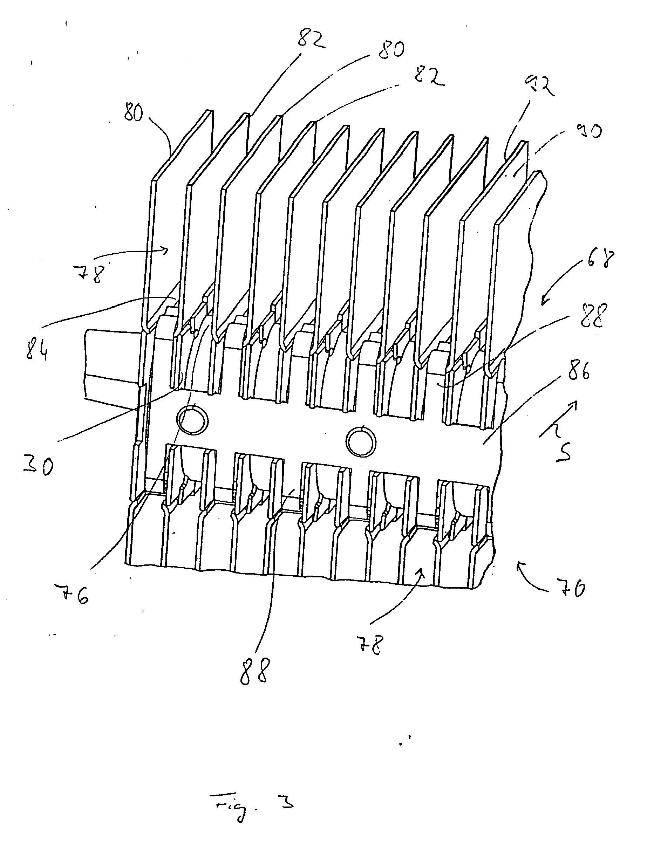

Die Einsenkungen 72 dienen zur Aufnahme bzw. Anlage von in den Figuren 1 und 3 erkennbaren Wärmeübertragungsrippenmodulen 78 und sorgen für eine großflächige Anlagefläche, was entscheidend ist für einen guten Wärmeübergang. Jedes dieser Wärmeübertragungsrippenmodule 78 umfasst zwei näherungsweise parallel nebeneinander liegende und mit näherungsweise rechteckiger Form ausgebildete Wärmeübertragungsrippen 80, 82, die in einem entsprechend der abgerundeten Formgebung der Einsenkungsbereiche 72 geformten Verbindungsabschnitt 84 miteinander verbunden sind. Diese Wärmeübertragungsmodule 78 können beispielsweise durch Ausstanzen und nachfolgendes Biegen aus Blechrohlingen gebildet werden. Im zusammengefügten Zustand ist vorzusgweise in jeder der entlang des Wärmetauscherkörpers 30 ausgebildeten Einsenkungen 72 ein derartiges Wärmeübertragungsmodul 78 angeordnet. Es ergibt sich somit die in Fig. 3 auch deutlicher erkennbare Konfiguration, bei welcher an den beiden bereits angesprochenen Seiten 68, 70 des Wärmetauscherkörpers 30 die verschiedenen Wärmeübertragungsmodule 78 nebeneinander liegen, so dass jeweils eine Wärmeübertragungsrippe 80 eines Wärmeübertragungsrippenmoduls 78 neben einer Wärmeübertragungsrippe 82 eines benachbarten Wärmeübertragungsrippenmoduls 78 liegt. Auf Grund der bereits angesprochenen Zwischenräume 76 zwischen den jeweiligen Einsenkungen 72 ist für einen gleichmäßigen Abstand der in der Längsrichtung des Wärmetauscherkörpers 30 aufeinander folgenden Wärmeübertragungsrippen 80, 82 gesorgt.

Zur Festlegung der Wärmeübertragungsrippenmodule 78 dienen an den zwischen den Seiten 68, 70 liegenden Seiten des Wärmetauscherkörpers 30 festlegbare Halteklammerelemente 86. Diese beispielsweise durch Schraub- oder Nietbolzen am Wärmetauscherkörper 30 festlegbaren Halteklammerelemente 86 weisen jedem Wärmeübertragungsrippenmodul 78 zugeordnet einen Halteklammerabschnitt 88 auf, der zwischen die beiden Wärmeübertragungsrippen 80, 82 eines jeweiligen Moduls eingreift und auf Grund seiner Elastizität bzw. seiner elastischen Vorspannung den Verbindungsabschnitt 84 fest gegen den Boden der zugehörigen Einsenkung 72 presst. Somit ist jedes Wärmeübertragungsrippenmodul 78 in den beiden Endbereichen seines Verbindungsabschnitts 84 jeweils durch einen Halteklammerabschnitt 88 eines Halteklammerelementes 86 festgehalten.

Durch die separate Anbringung der verschiedenen Wärmeübertragungsrippenmodule 78 am Wärmetauscherkörper 30 wird es möglich, die Größe und die Anzahl der vorzusehenden Wärmeübertragungsrippenmodule 78 bzw. der Wärmeübertragungsrippen 80, 82 derselben an die durch die Gehäuseanordnung 12 vorgegebenen räumlichen Bedingungen anzupassen. Somit ist das erfindungsgemäße Luftheizgerät 10 ohne größere Anpassungsmaßnahmen in wesentlichen und kostenaufwendigen Systemkomponenten desselben in einfacher Art und Weise anpassbar an verschieden große Gehäuseanordnungen 12, indem lediglich die Wärmeübertragungsrippen entsprechend ausgewählt bzw. geformt werden. Nach dem Zusammenfügen der Wärmeübertragungsrippenmodule 78 mit dem Wärmetauscherkörper 30 und dem Einsetzen des Luftheizgeräts 10 in die Gehäuseanordnung 12 stellen dann die Wärmeübertragungsrippen 80, 82 an den beiden Seiten 68, 70 des Wärmetauscherkörpers 30, an welchen der die Gehäuseanordnung 12 durchströmende Luftstrom sich am Wärmetauscherkörper 30 vorbeibewegen wird, jeweils Wärmeübertragungsflächen 90, 92 bereit, die näherungsweise parallel zur Strömungsrichtung S dieses Luftstroms liegen. Ferner erstrecken sich die Wärmeübertragungsrippen vorzugsweise mit ihrer längeren Erstreckungslänge in der Strömungsrichtung S, so dass eine sehr große Wärmeübertragunsgstrecke bereitgestellt werden kann, wobei auf Grund der angesprochenen Parallelanordnung ein möglichst geringer Strömungswiderstand eingeführt wird. Man erkennt ferner in Fig. 2, dass an der Außenseite des Wärmetauscherkörpers 30 ein Temperaturfühler 94 vorgesehen ist, welcher ein zur Ansteuerung des Brennerbereichs 18 heranziehbares Temperatursignal bereitstellt.

Durch den vorangehend beschriebenen Aufbau wird ein Luftheizgerät bereitgestellt, das in einfacher Art und Weise zur Integration in verschieden geformte bzw. verschieden große Gehäuseanordnungen adaptierbar ist. Trotz der separaten Ausgestaltung der Wärmeübertragungsrippen bzw. der diese aufweisenden Wärmeübertragungsmodule wird im Übergangsbereich zwischen dem Wärmetauscherkörper und den Wärmeübertragungsrippenmodulen auf Grund des großflächigen Anlagekontaktes in den dafür vorgesehenen Einsenkungen bzw. Anlagebereichen eine sehr effiziente Wärmeübertragung zwischen diesen Systembereichen gewährleistet.

Durch das Kombinieren eines Fahrzeugklimagerätes mit einem Luftheizgerät in einer Gehäuseanordnung wird neben dem Vorteil der erheblichen Platzeinsparung auch eine deutliche Vergrößerung der Vielseitigkeit im Betrieb erlangt. So kann das Luftheizgerät nicht nur als Standheizung eingesetzt werden, sonderen kann selbstverständlich auch im Zuheizbetrieb und im Umluftbetrieb zum Einsatz kommen. Auch ist die Beimengung von Frischluft und durch den zumindest kurzzeitigen parallelen Betrieb der Klimaeinheit des Klimageräts und des Luftheizgeräts eine sehr schnell ansprechende Temperatureinstellung bzw. Luftfeuchtigkeitsregulierung möglich. Auch kann eine Defrosterfunktion leicht realisiert werden, da die von dem Luftheizgerät erwärmte Luft durch das Fahrzeuggebläse und das im Fahrzeug vorgesehene Luftleitungssystem sehr schnell im Innenraum des Fahrzeugs verteilt werden kann. Insbesondere bei Betrieb im Standheizungsmodus kann derart vorgegangen werden, dass das Luftgebläse der Brenneranordnung und das Fahrzeugluftgebläse voneinander unabhängig aktiviert werden, so dass diese beiden Gebläse für die jeweiligen thermischen Anforderungen bzw. Verbrennungsanforderungen optimal betrieben werden können.

Ein weiterer Vorteil der ist die leichte Zugänglichkeit des Brennerbereichs außerhalb der Gehäuseanordnung. Diese Positionierung weist weiter den Vorteil auf, dass hinsichtlich des Brennerbereichs im Wesentlichen keine Form- bzw. Bauraumvorgabe besteht. Somit können Brennerbereiche verschiedenen Typs problemlos an den Wärmetauscherkörper 30 angesetzt werden.

In den Figuren 4 und 5 ist ein erfindungsgemäßes Luftheizgerät bzw. eine Kombination einer Gehäuseanordnung mit einem derartigen Lüftheizgerät dargestellt. Komponenten, welche vorangehend beschriebenen Komponenten hinsichtlich Aufbau bzw. Funktion entsprechen, sind mit den gleichen Bezugszeichen unter Hinzufügung eines Anhangs "a" bezeichnet.

Zunächst sei mit Bezug auf die Fig. 5 ein noch etwas detaillierterer der Aufbau des Brennerbereichs 18a beschrieben. Man erkennt ein Brennkammergehäuse 100a, das mit einer Außenwand 102a und einer Bodenwand 104a eine allgemein mit 106a bezeichnete Brennkammer begrenzt. Ein zentraler Lufteinführstutzen 108a begrenzt die somit ringförmig aufgebaute Brennkammer nach radial innen und weist mehrere Lufteintrittsöffnungen 110a auf, über welche die vermittels des Verbrennungsluftgebläses 20a zugeführte Verbrennungsluft in die Brennkammer 106a gelangt. Das Brennkammergehäuse 100a ist vermittels eines nach radial außen greifenden Flanschabschnitts 112a an einem Brenneraußengehäuse 114a befestigt, welches wiederum mit dem Wärmetauscherkörper 30a verbunden ist oder mit diesem sogar integral ausgebildet ist. Selbst bei integraler Ausgestaltung kann in einfacher Art uns Weise Zugriff auf die Systemkomponenten Verbrennungsluftgebläse 20a und Brennkammergehäuse 100a erlangt werden, ohne das gesamte Luftheizgerät aus der Gehäuseanordnung 12a ausbauen zu müssen.

Wie bereits vorangehend ausgeführt, treten die bei Verbrennung in der Brennkammer 106a erzeugten Verbrennungsabgase über eine Flammblende 26a und ein Flammrohr 28a in den Innenraum 32a des Wärmetauscherkörpers 30a ein. Man erkennt vor allem in der Darstellung der Fig. 5, dass dieser Innenraum 32a vom Endbereich 34a zum Endbereich 48a sich verjüngend ausgebildet ist, so dass bei abnehmender Temperatur der in dieser Richtung sich bewegenden Vebrennungsabgase eine näherungsweise gleichbleibende Wärmeübertragungscharakteristik beibehalten werden kann.

In der in Fig. 5 dargestellten Ausgestaltungsform ist der Abgasaustritt 66a im Endbereich 48a des Wärmetauscherkörpers 30 ausgebildet. Ein Abgasleitungsrohr 116a ist dort mit dem Wärmetauscherkörper 30a verbunden und führt die Verbrennungsabgase dann aus der Gehäuseanordnung 12a heraus.

Man erkennt ferner bei der Ausgestaltungsform gemäß den Figuren 4 und 5, dass die Wärmeübertragungsrippenmodule 78a jeweils nur eine einzige im Wesentlichen scheibenartig ausgebildete Wärmeübertragungsrippe 80a aufweisen. In ihrem zentralen Bereich bilden die Wärmeübertragungsrippenmodule 78a einen zur thermischen Ankopplung an die Außenseite des Wärmetauscherkörpers 30a dienenden hülsenartigen Abschnitt 118a. Die Wärmeübertragungsrippenmodule können beispielsweise durch Ausstanzen und Umformen eines Blechrohlings gebildet werden, so dass in der Mitte eine zentrale Öffnung gebildet wird, welche von dem hülsenartigen Abschnitt 118a umgeben ist. Mit diesem hülsenartigen Abschnitt 118a werden dann die einzelnen Wärmeübertragungsrippenmodule 78a auf den Wärmetauscherkörper 30a aufgeschoben. Dieser kann in Anpassung an die abnehmende Abmessung des Innenraums 32a auch in seinem Außenbereich eine entsprechend abnehmende Abmessung aufweisen, um eine näherungsweise gleichmäßige Wandungsstärke beizubehalten. Aus fertigungstechnischen Gründen ist es vorteilhaft, an der Außenseite eine stufenartige Abmessungsabnahme vorzusehen, so dass bei der sehr einfach zu fertigenden zylinderartigen Form der Hülsenabschnitte 118a ein großflächiger Wärmeübertragungskontakt zwischen diesen der thermischen Ankopplung dienenden Hülsenabschnitten 118a und dem Wärmetauscherkörper 30a bereitgestellt wird. Die einzelnen Wärmeübertragungsrippenmodule 78a können dann beispielsweise durch Anlöten oder Ankleben an der Außenseite des Wärmetauscherkörpers 30a festgelegt werden, wodurch ein guter Wärmeübergang geschaffen wird.

Auch bei dieser Ausgestaltungsform kann durch einfache Auswahl der Größe bzw. der Formgebung der Wärmeübertragungsrippenmodule 78 insbesondere im Bereich ihrer Wärmeübertragungsrippen 80 eine Anpassung an verschiedene räumliche Gegebenheiten im Bereich der Gehäuseanordnung 12a erlangt werden.

Die in den Figuren 4 und 5 dargestellte Ausgestaltungsform weist hinsichtlich der durch die Kombination beispielsweise mit einem Fahrzeugklimagerät bzw. die Eingliederung in die Gehäuseanordnung eines derartigen Klimageräts vorliegenden Betriebsmöglichkeiten die gleichen Vorteile auf, wie sie vorangehend mit Bezug auf die Figuren 1 bis 3 bereits beschrieben worden sind.

## Patentansprüche

1. Luftheizgerät zur Integration in eine Luft führende Gehäuseanordnung (12; 12a) eines Fahrzeugklimagerätes, umfassend: einen Brennerbereich (18a), einen Wärmetauscherbereich mit einem Wärmetauscherkörper (30a), wobei in dem Wärmetauscherkörper (30a) ein Verbrennungsabgasführungsraum (32a) ausgebildet ist, in welchem die bei der Verbrennung im Brennerbereich (18a) erzeugten heißen Verbrennungsabgase strömen, an einer Außenseite des Wärmetauscherkörpers (30a) eine Wärmeübertragungsrippenanordnung mit einer Mehrzahl von Wärmeübertragungsrippen (80a) zum Umströmen durch in der Gehäuseanordnung (12a) geführte Luft, wobei wenigstens ein Teil der Wärmeübertragungsrippen (80a) von dem Wärmetauscherkörper (30a) getrennt ausgebildet ist und mit diesem in Wärmeübertragungskontakt gehalten ist, **dadurch gekennzeichnet dass**, der Wärmetauscherkörper (30a) zur Bereitstellung eines in Richtung von dem Brennerbereich (18a) weg abnehmenden Strömungsquerschnitts für aus dem Brennerbereich (18a) austretende Verbrennungsabgase mit sich verjüngendem Innenraum ausgebildet ist und in Anpassung an die abnehmende Abmessung des Innenraums eine abnehmende Außenabmessung aufweist.

2. Luftheizgerät nach Anspruch 1,
**dadurch gekennzeichnet, dass** an der Außenseite des Wärmetauscherkörpers (30a) eine stufenartige Abnahme der Außenabmessung vorgesehen ist.

3. Luftheizgerät nach Anspruch 1 oder 2,
**dadurch gekennzeichnet, dass** der Wärmetauscherkörper (30a) in Richtung einer Körperlängsachse (L) langgestreckt ist und dass wenigstens ein Teil der Wärmeübertragungsrippen (80a) für die zu wärmende Luft eine im Wesentlichen orthogonal zur Körperlängsachse (L) stehende Wärmeübertragungsfläche (90a, 92a) bereitstellt.

4. Luftheizgerät nach Anspruch 1, 2 oder 3,
**dadurch gekennzeichnet, dass** die Wärmeübertragungsrippenanordnung wenigstens ein Wärmeübertragungsrippenmodul (78a) umfasst und dass das wenigstens eine Wärmeübertragungsrippenmodul (78a) einen zur thermischen Ankopplung an den Wärmetauscherkörper (30a) ausgebildeten Ankopplungsbereich (118a) sowie wenigstens eine an den Ankopplungsbereich (118a) anschließende Wärmeübertragungsrippe (80a) umfasst.

5. Luftheizgerät nach Anspruch 4,
**dadurch gekennzeichnet, dass** das wenigstens eine Wärmeübertragungsrippenmodul (78a) mit dem Wärmetauscherkörper (30a) materialschlüssig, vorzugsweise durch Verlöten oder Verkleben, verbunden ist.

6. Luftheizgerät nach einem der Ansprüche 4 oder 5,
**dadurch gekennzeichnet, dass** das wenigstens eine Wärmeübertragungsrippenmodul (78a) einen hülsenartigen und den Wärmetauscherkörper (30a) an seiner Außenseite umgebend zu positionierenden Ankopplungsbereich (118a) aufweist, an welchen eine im Wesentlichen scheibenartige Wärmeübertragungsrippe (80a) anschließt.

7. Luftheizgerät nach einem der Ansprüche 1 bis 6,
**dadurch gekennzeichnet, dass** in einem Verbindungsbereich (34a) des Wärmetauscherkörpers (30a) mit dem Brennerbereich (18a) eine Befestigungsanordnung (36a) vorgesehen ist zur Festlegung an der Gehäuseanordnung (12a) derart, dass der Wärmetauscherkörper (30a) im Wesentlichen innerhalb eines Luft führenden Volumenbereichs der Gehäuseanordnung (12a) zu liegen kommt und der Brennerbereich (18a) im Wesentlichen außerhalb des Luft führenden Volumenbereichs der Gehäuseanordnung (12a) zu liegen kommt.

8. Luftheizgerät nach einem der Ansprüche 1 bis 7,
**dadurch gekennzeichnet, dass** in dem Wärmetauscherkörper (30) ein Abgasaustrittsabschnitt (66) an einem außerhalb eines Luft führenden Volumenbereichs der Gehäuseanordnung (12) zu positionierenden Bereich (34) des Wärmetauscherkörpers (30) vorgesehen ist.

9. Luftheizgerät nach einem der Ansprüche 1 bis 8,
**dadurch gekennzeichnet, dass** der Wärmetauscherkörper (30a) mit seiner Längserstreckung zum Positionieren im Wesentlichen orthogonal zu einer Luftströmungsrichtung (S) in einem Luft führenden Volumenbereich der Gehäuseanordnung (12a) ausgebildet ist.

10. Kombination einer Luft führenden Gehäuseanordnung (12; 12a), insbesondere eines Fahrzeugklimagerätes, mit einem Luftheizgerät (10; 10a) nach einem der vorangehenden Ansprüche, wobei das Luftheizgerät (10; 10a) einen außerhalb eines Luft führenden Volumenbereichs der Gehäuseanordnung (12; 12a) positionierten Brennerbereich (18; 18a) und einen im Wesentlichen in dem Luft führenden Volumenbereich der Gehäuseanordnung (12; 12a) sich erstreckend positionierten Wärmetauscherkörper (30; 30a) aufweist.

11. Kombination nach Anspruch 10,
**dadurch gekennzeichnet, dass** der Wärmetauscherkörper (30; 30a) mit seiner Längserstreckungsrichtung im Wesentlichen orthogonal zu einer Strömungsrichtung (S) eines den Luft führenden Volumenbereich der Gehäuseanordnung (12; 12a) durchsetzenden Luftstroms positioniert ist.

12. Kombination nach Anspruch 10 und Anspruch 11,
**dadurch gekennzeichnet, dass** an dem Wärmetauscherkörper (30) in einem außerhalb des Luft führenden Volumenbereichs der Gehäuseanordnung (12) positionierten Bereich (34) desselben ein Abgasaustrittsbereich (66) ausgebildet ist.

13. Kombination nach einem der Ansprüche 10 bis 12,
**dadurch gekennzeichnet, dass** der Brennerbereich (18; 18a) eine Gebläseanordnung (20; 20a) zum Einleiten von Verbrennungsluft in diesen aufweist und dass zum Betreiben des Luftheizgerätes (10; 10a) als Standheizung die Gebläseanordnung (20; 20a) des Brennerbereichs (18; 18a) sowie zusätzlich zu dieser eine Fahrzeuggebläseanordnung zum Fördern eines Luftstroms durch den Luft führenden Volumenbereich der Gehäuseanordnung (12; 12a) hindurch aktiviert werden.

## Claims

1. An air heating appliance to be integrated into an air-ducting housing assembly (12;12a) of a vehicle air-conditioner, comprising: a burner zone (18a), a heat-exchanger zone with a heat-exchanger body (30a), wherein in the heat-exchanger body (30a) there is formed a burner gas conveying chamber (32a) in which flow the hot burner gases created during the combustion in the burner zone (18a), on an outer side of the heat-exchanger body (30a) a heat-transfer fin assembly with a plurality of heat-transfer fins (80a) around which circulates air conveyed in the housing assembly (12a), wherein at least some of the heat-transfer fins (80a) are formed separately from the heat-exchanger body (30a) and is maintained in heat-transmitting contact with the latter, **characterised in that**, to provide a flow cross-section which decreases in a direction away from the burner zone (18a) for burner gases emerging from the burner zone (18a), the heat-exchanger body (30a) is formed with a tapering interior and is of decreasing external dimensions in conformity with the decreasing dimensions of the interior.

2. An air heating appliance according to Claim 1, **characterised in that** a stepped decrease in the external dimensions is provided on the outside of the heat-exchanger body (30a).

3. An air heating appliance according to Claim 1 or 2, **characterised in that** the heat-exchanger body (30a) is elongated in the direction of a longitudinal axis (L) of the body, and **in that** at least some of the heat-transfer fins (80a) for the air to be heated provide a heat-transmission surface (90a,92a) disposed substantially orthogonal to the longitudinal axis (L) of the body.

4. An air heating appliance according to Claim 2 or 3, **characterised in that** heat-transfer fin assembly comprises at least one heat-transfer fin module (78a), and **in that** at least one heat-transfer fin module (78a) comprises a coupling zone (118a) designed for thermal coupling to the heat-exchanger body (30a), and also at least one heat-transfer fin (80a) adjoining the coupling zone (118a).

5. An air heating appliance according to Claim 4, **characterised in that** the at least one heat-transfer fin module (78a) is connected cohesively to the heat-exchanger body (30a), preferably by soldering or bonding.

6. An air heating appliance according to Claim 4 or 5, **characterised in that** the at least one heat-transfer fin module (78a) has a sleeve-like coupling zone (118a) which is to be positioned surrounding the heat-exchanger body (30a) on its outside and which is adjoined by a substantially disc-like heat-transfer fin (80a).

7. An air heating appliance according to any one of Claims 1 to 6, **characterised in that** a fastening assembly (36a) is provided in a connecting zone (34a) of the heat-exchanger body (30a) to the burner zone (18a) for location on a housing assembly (12a) in such a way that the heat-exchanger body (30a) is situated substantially inside an air-ducting volume zone of the housing assembly (12a) and the burner zone (18a) is situated substantially outside the air-ducting volume zone of the housing assembly (12a).

8. An air heating appliance according to any one of Claims 1 to 7, **characterised in that** an exhaust gas outlet portion (66) is provided in the heat-exchanger body (30a) on a zone of the heat-exchanger body (30a) to be positioned outside an air-ducting volume zone of the housing assembly (12a).

9. An air heating appliance according to Claim 8, **characterised in that** the heat-exchanger body (30a) with its longitudinal extension for positioning substantially orthogonal to an air-flow direction (S) is formed in an air-ducting volume zone of the housing assembly (12a).

10. A combination of an air-ducting housing assembly (12;12a), in particular of a vehicle air-conditioner, with an air heating appliance (10;10a) according to any one of the preceding Claims, wherein, the air heating appliance (10;10a) has a burner zone (18;18a) positioned outside an air-ducting volume zone of the housing assembly (12;12a) and a heat-exchanger body (30;30a) positioned extending substantially in the air-ducting volume zone of the housing assembly (12;12a).

11. A combination according to Claim 10, **characterised in that** the heat-exchanger body (30;30a) is positioned with its longitudinal extension direction substantially orthogonal to a flow direction (S) of an air flow passing through the air-ducting volume zone of the housing assembly (12;12a).

12. A combination according to Claim 10 and Claim 11, **characterised in that** an exhaust-gas outlet zone (66) is formed on the heat-exchanger body (30) in a zone (34) thereof positioned outside the air-ducting volume zone of the housing assembly (12).

13. A combination according to any one of Claims 10 to 12, **characterised in that** the burner zone (18;18a) has a fan assembly (20;20a) for introducing combustion air therein, and **in that** to operate the air heating appliance (10;10a) as a stationary heater the fan assembly (20;20a) of the burner zone (18;18a) and, in addition thereto, a vehicle blower assembly for conveying an air stream through the air-ducting volume zone of the housing assembly (12;12a) are activated.

## Revendications

1. Aérotherme destiné à être intégré dans un système de boîtier (12 ; 12a) guidant l'air d'un climatiseur de véhicule, comportant : une zone de brûleur (18a), une zone d'échangeur thermique dotée d'un corps d'échangeur thermique (30a), une chambre d'évacuation des gaz de combustion (32a) étant conçue dans le corps d'échangeur thermique (30a), chambre dans laquelle s'écoulent les gaz d'échappement de combustion brûlants produits à l'occasion de la combustion dans la zone de brûleur (18a), sur une face extérieure du corps d'échangeur thermique (30a) un ensemble de nervures de transmission thermique doté d'une pluralité de nervures de transmission thermique (80a) pour l'écoulement par contournement par l'air guidé dans le système de boîtier (12a), au moins une partie des nervures de transmission thermique (80a) étant conçue séparément du corps d'échangeur thermique (30a) et étant maintenue en contact de transmission thermique avec celui-ci, **caractérisé en ce que** le corps d'échangeur thermique (30a), pour mettre à disposition une section transversale d'écoulement décroissante dans la direction s'éloignant de la zone de brûleur (18a) pour les gaz d'échappement de combustion sortant de la zone de brûleur (18a), est conçu avec un espace intérieur se rétrécissant et comprend en adaptation à la dimension décroissante de l'espace intérieur une dimension extérieure décroissante.

2. Aérotherme selon la revendication 1, **caractérisé en ce qu'**un décroissement progressif de la dimension extérieure est prévu sur la face extérieure du corps d'échangeur thermique (30a).

3. Aérotherme selon la revendication 1 ou 2, **caractérisé en ce que** le corps d'échangeur thermique (30a) est étiré longitudinalement en direction d'un axe longitudinal de corps (L) et **en ce qu'**au moins une partie des nervures de transmission thermique (80a) pour l'air destiné à être chauffé met à disposition une surface de transmission thermique (90a, 92a) sensiblement perpendiculaire à l'axe longitudinal de corps (L).

4. Aérotherme selon la revendication 1, 2 ou 3, **caractérisé en ce que** le système de nervures de transmission thermique comporte au moins un module de nervures de transmission thermique (78a) et **en ce que** le au moins un module de nervures de transmission thermique (78a) comporte une zone de couplage (118a) conçue en vue du couplage thermique au corps d'échangeur thermique (30a) ainsi qu'au moins une nervure de transmission thermique (80a) raccordée à la zone de couplage (118a).

5. Aérotherme selon la revendication 4, **caractérisé en ce que** le au moins un module de nervures de transmission thermique (78a) est relié au corps d'échangeur thermique (30a) par coopération de matériau, de préférence par soudage ou collage.

6. Aérotherme selon la revendication 4 ou 5, **caractérisé en ce que** le au moins un module de nervures de transmission thermique (78a) comprend une zone de couplage (118a) en forme de manchon et destinée à être positionnée de manière à entourer le corps d'échangeur thermique (30a) sur sa face extérieure, zone à laquelle se raccorde une nervure de transmission thermique (80a) sensiblement en forme de disque.

7. Aérotherme selon l'une quelconque des revendications 1 à 6, **caractérisé en ce qu'**il est prévu dans une zone de liaison (34a) du corps d'échangeur thermique (30a) à la zone de brûleur (18a) un système de fixation (36a) destiné à la fixation au système de boîtier (12a), de telle sorte que le corps d'échangeur thermique (30a) vient se situer sensiblement à l'intérieur d'une zone de volume guidant l'air du système de boîtier (12a) et que la zone de brûleur (18a) vienne se situer sensiblement à l'extérieur de la zone de volume guidant l'air du système de boîtier (12a).

8. Aérotherme selon l'une quelconque des revendications 1 à 7, **caractérisé en ce qu'**il est prévu dans le corps d'échangeur thermique (30) une section de sortie des gaz d'échappement (66) sur une zone (34) du corps d'échangeur thermique (30) destinée à être positionnée à l'extérieur d'une zone de volume guidant l'air du système de boîtier (12).

9. Aérotherme à l'air selon l'une quelconque des revendications 1 à 8, **caractérisé en ce que** le corps d'échangeur thermique (30a) avec son extension longitudinale est conçu pour être positionné sensiblement perpendiculairement par rapport à une direction d'écoulement d'air (S) dans une zone de volume guidant l'air du système de boîtier (12a).

10. Combinaison d'un système de boîtier guidant l'air (12, 12a), en particulier d'un climatiseur de véhicule, comprenant un aérotherme (10, 10a) selon l'une quelconque des revendications précédentes, l'aérotherme (10, 10a) comprenant une zone de brûleur (18 ; 18a) positionnée à l'extérieur d'une zone de volume guidant l'air du système de boîtier (12 ; 12a) et un corps d'échangeur thermique (30 ; 30a) positionné en s'étendant sensiblement dans la zone de volume guidant l'air du système de boîtier (12 ; 12a).

11. Combinaison selon la revendication 10, **caractérisée en ce que** le corps d'échangeur thermique (30; 30a) est positionné avec son extension longitudinale sensiblement perpendiculairement à une direction d'écoulement (S) d'un courant d'air traversant la zone de volume guidant l'air du système de boîtier (12 ; 12a).

12. Combinaison selon la revendication 10 et la revendication 11, **caractérisée en ce qu'**une sortie des gaz d'échappement (66) est conçue sur le corps d'échangeur thermique (30) dans une zone (34) de celui-ci positionnée à l'extérieur de la zone de volume guidant l'air du système de boîtier (12).

13. Combinaison selon l'une quelconque des revendications 10 à 12, **caractérisée en ce que** la zone de brûleur (18 ; 18a) comprend un système de ventilateur (20 ; 20a) destinée à introduire l'air de combustion dans celle-ci et **en ce que** pour faire fonctionner l'aérotherme (10 ; 10a) comme chauffage auxiliaire, le système de ventilateur (20 ; 20a) de la zone de brûleur (18 ; 18a) et en plus de celui-ci un système de ventilateur de véhicule destiné à acheminer un courant d'air à travers la zone de volume guidant l'air du système de boîtier (12 ; 12a) sont activés.
